# EUROPEAN PATENT APPLICATION

(11) **EP 2 942 856 A1**
(43) Date of publication of application: **11.11.2015**
(21) Application number: 15166428.1
(22) Date of filing: 05.05.2015
(51) Int. Cl.: H02J 17/00, H02M 7/219

(54) **MAGNETIC FIELD ENERGY HARVESTING DEVICE**

(30) Priority: 09.05.2014 US 201414274587
(71) Applicant: Analog Devices Global, Hamilton (BM)
(72) Inventor: Strzalkowski, Bernhard, 81377 Munich (DE)
(74) Representative: Beck, Simon Antony

(57) **Abstract**

A magnetic field energy harvesting device (200) includes an inductor (210) and a controller (220). The inductor comprises two inductor windings (210.1, 210.2) connected to each other in series, configured in winding directions and orientations to generate two voltages relative to the middle tap of inductor and out of phase with each other. The controller (220) switches the two voltages and generates an approximately constant DC output voltage (Uout) at an output capacitor (290) by alternating switching on and off switches (270.1, 270.2).

## Description

### BACKGROUND

The subject matter of this application is directed to a magnetic field energy harvester.

Energy from an alternating magnetic field may be harvested by generating current through induction by coiled wires or inductor coils. However, the resulting current may need to be rectified to generate proper electrical voltage and current supplies with proper polarity.

Rectifiers may be configured as passive one-leg or in 4-quarter rectifier circuit. Active rectifiers may involve a complex controller that needs its own power supply feeding from the inductor coils. Passive rectifiers may have inefficiencies due to power loss below diode turn on voltage range. Active rectifiers may have too complex of circuitry.

Accordingly, there is continual need for magnetic field energy harvesting devices with efficient active rectifiers without increasing complexity.

### BRIEF DESCRIPTION OF THE DRAWINGS

So that features of the present invention can be understood, a number of drawings are described below. It is to be noted, however, that the appended drawings illustrate only particular embodiments of the disclosure and are therefore not to be considered limiting of its scope, for the invention may encompass other equally effective embodiments.
FIG. 1 illustrates an exemplary magnetic field energy harvester according to an embodiment of the present invention.
FIG. 2 illustrates an exemplary magnetic field energy harvester according to an embodiment of the present invention.
FIG. 3 illustrates a signal timing diagram for an exemplary magnetic field energy harvester according to an embodiment of the present invention.
FIGS. 4A and 4B illustrate exemplary magnetic field energy harvesters according to an embodiment of the present invention.
FIG. 5 illustrates an exemplary magnetic field energy harvester according to an embodiment of the present invention.
FIG. 6 illustrates a signal timing diagram for an exemplary magnetic field energy harvester according to an embodiment of the present invention.

### DETAILED DESCRIPTION

Embodiments of the present invention may provide for a magnetic field energy harvester.

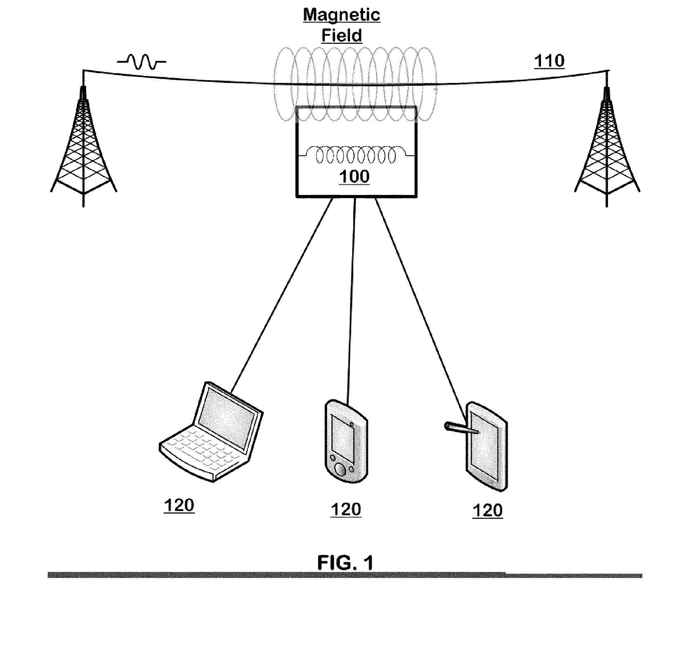

In one embodiment as illustrated in FIG. 1, a magnetic field energy harvesting device 100 may be provided near and within the magnetic field of a power transmission line 110. The power transmission line 110 may transmit an alternating current (AC) electric supply, which generates alternating magnetic field having magnetic flux. The magnetic field energy harvesting device 100 may harvest energy from the magnetic field and convert the harvested energy into electrical power, which is supplied to power one or more electronic devices 120.

In a particular embodiment, the electronic devices 120 may be mobile field equipment used to test or diagnose equipment in a remote location, where standard power supply from utility grid is not available. Portable batteries and power generators may be too cumbersome for use, especially if the mobile field equipment 120 are very small themselves. In such a case, a compact magnetic field energy harvesting device 100 may be a viable solution to provide the small amount of power needed for electronic devices 120, by harvesting the magnetic field energy of the power transmission line 110.

In an embodiment, the magnetic field energy harvesting device 100 may be physically placed next to or near a power transmission line 110, preferably close as possible to expose the magnetic field energy harvesting device 100 to maximum magnetic field strength. The magnetic field energy may not need to be sinusoidal in amplitude waveform, and may be in the form of any number of oscillating waveforms, such as triangular, sawtooth, square, etc.

In an embodiment, the magnetic field energy harvesting device 100 may harvest magnetic field energy from other sources, such as the magnetic field of moving magnetic objects such as magnets in a moving armature of a turbine.

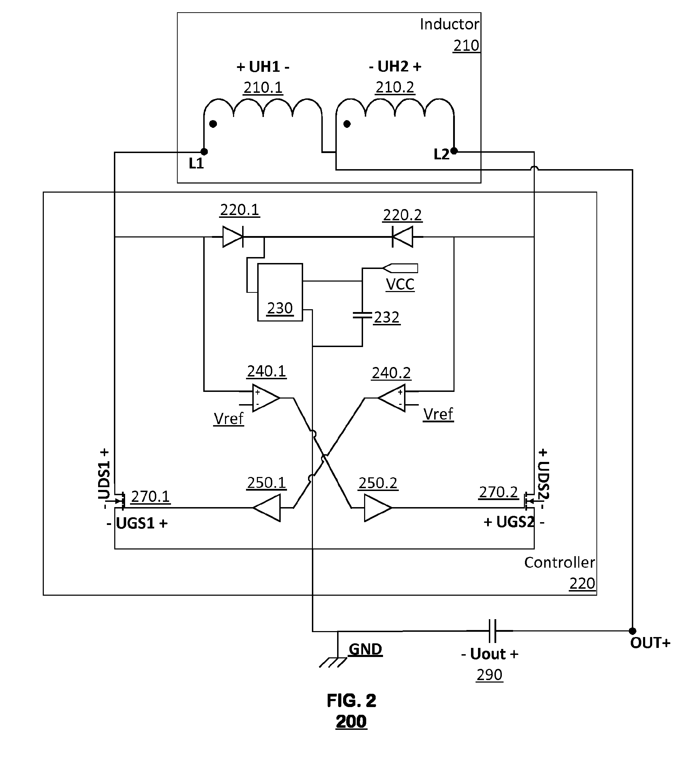

FIG. 2 illustrates an exemplary magnetic field energy harvester according to an embodiment of the present invention.

As illustrated in FIG. 2, a device 200 may include an inductor 210 and a controller 220. The inductor 210 may include two inductor windings 210.1 and 210.2 connected to each other in series, configured in winding directions and orientations to generate two voltages (UH1, UH2) relative to the middle tap of inductor 210 (connected to OUT+) and out of phase (for example, by 180 degrees out of phase) with each other. The controller 220 may monitor the two voltages (UH1, UH2) and may generate approximately constant DC output voltage (Uout, as between node OUT+ and GND) by alternating switching on and off switches 270.1 and 270.2.

The controller 220 may include two diodes 220.1 and 220.2 with both cathodes connected to each other and to a charge pump 230 and with respective anodes connected to the two end nodes L1 and L2 of the inductor 210. The charge pump 230 is also connected to GND and outputs a supply to a capacitor 232 to maintain a VCC power supply internal to the controller 220. In this fashion, regardless of which polarity or phase the inductor 210 is generating, the charge pump 230 may draw current from the inductor 210 to power the VCC node internal to the controller 220, with the VCC node powering components within the controller 220. The charge pump 230 may be optional, if the inductor produces sufficiently high voltage and energy to directly charge the capacitor 232 and maintain it at full charge during the all phases of switching.

The diodes 220.1 and 220.2 may be low voltage switching diodes, such as Schottky diodes. The two end nodes L1 and L2 of the inductor 210 may also be connected to respective inputs of two comparators 240.1 and 240.2, so that voltages of nodes L1 and L2 are compared respectively to reference voltages Vref. Vref for the two comparators 240.1 and 240.2 may be the same or different from each other. Vref may be generated by a variety of means and circuits, preferably internal to the controller 220, for example by resistive and/or diode voltage dividers. Vref may also be set from external settings or voltage signals.

The outputs of the comparators 240.1 and 240.2 may be cross-fed to respective inputs of two buffers 250.1 and 250.2, which have respective outputs connected to the respective gates of two switches 270.1 and 270.2. Buffers 250.1 and 250.2 may be optional, such that the outputs of the comparators 240.1 and 240.2 are connected to the gates of switches 270.1 and 270.2, that is in cross-feed configuration, such that the output of comparator 240.1 is connected to gate of switch 270.2 and the output of comparator 240.2 is connected to gate of switch 270.1.

The switches 270.1 and 270.2 may have respective drain nodes connected to end nodes L1 and L2 of the inductor 210, and respective source nodes connected to GND. Switches 270.1 and 270.2 may have respective drain-source voltages (UDS1 and UDS2) and respective gate-source voltages (UGS1 and UGS2). The switches 270.1 and 270.2 may be metal-oxide-silicon-field-effect-transistors (MOSFET's), or other types of transistors. Preferably, switches 270.1 and 270.2 may be n-type MOSFET's.

Furthermore, the device 200 may include an output capacitor 290 to smooth out and maintain an approximately constant DC output voltage (Uout) for output power supply, which may be used to power external electronic devices.

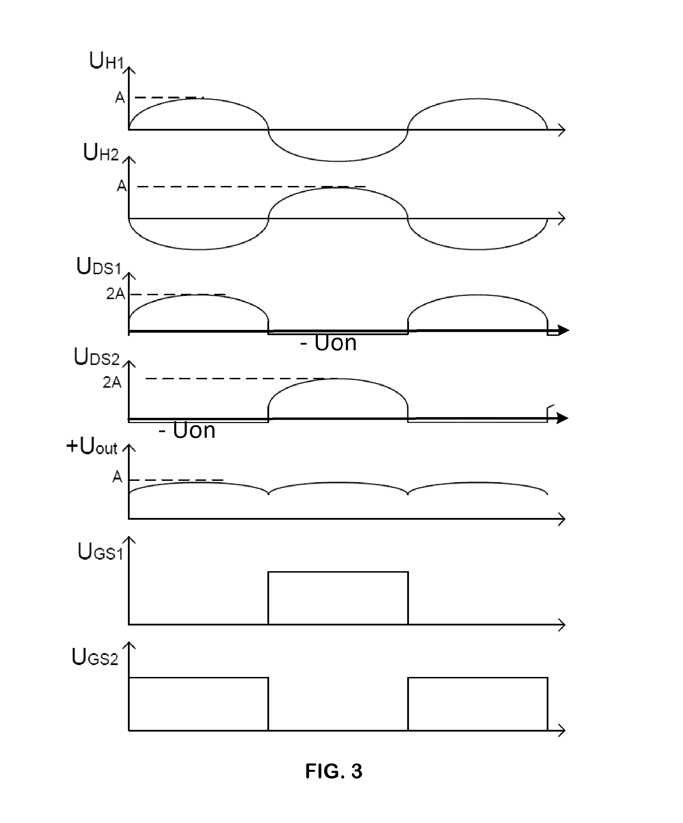

FIG. 3 illustrates a signal timing diagram for an exemplary magnetic field energy harvester 200 in FIG. 2, according to an embodiment of the present invention.

According to FIG. 3, the double winding inductor 210 may generate two voltages, such that one of two voltages (UDS1, UDS2) always has positive value in respect to the ground potential and has double amplitude of the single inductor voltage (noted as 2A), while the other one of two voltages (UDS1, UDS2) is held at a negative turn on voltage (-Uon) relative to the ground potential. This allows continuous voltage supply for the internal charge pump 230, which generates internal control supply voltage VCC. The two voltages of the inductor 210 may also allow control the turn-on and turn-off time in alternating of the switches 270.1 and 270.2 in synchronous rectification, in order to get full-wave rectification.

That is, regardless of which electrical polarity the inductor 210 is generating, the middle tap connected to node OUT+ is in positive polarity relative to GND and one of the end nodes of inductor 210, and the other end node of inductor 210 is channeled by the controller 220 to power the charge pump 230 and the internal VCC of the controller 220 to control the switches 270.1 and 270.2.

This active switching, as highly efficient synchronous rectification, may allow effectively rectification of low voltage signals generated in the inductor 210 with voltage magnitude at below 1 volt. The two windings approach allows internal voltage supply for the controller 220 and of control signals for two switches 270.1 and 270.2 working in synchronous rectification mode.

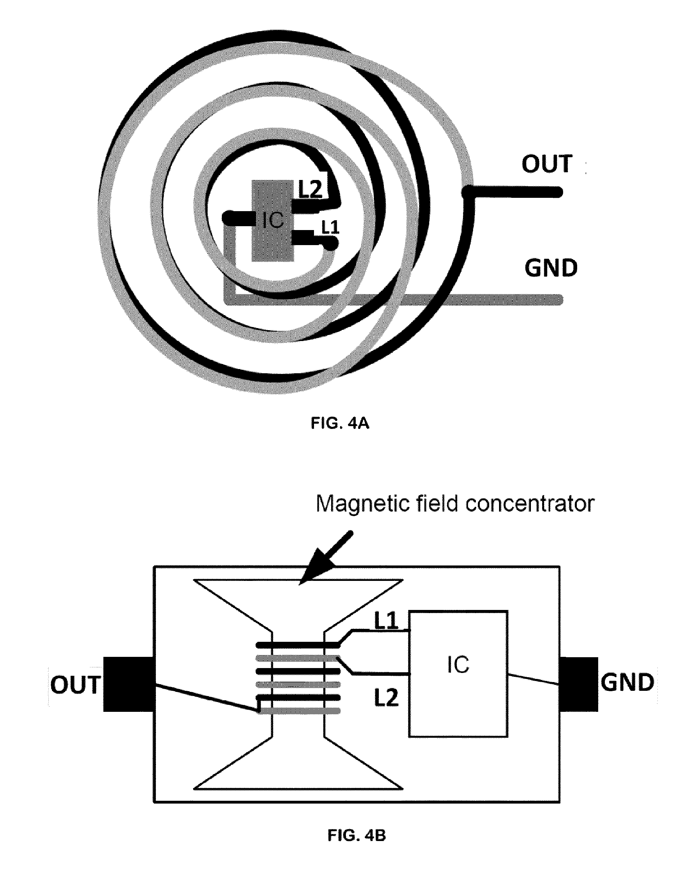

FIGS. 4A and 4B illustrate exemplary magnetic field energy harvesters according to an embodiment of the present invention.

FIG. 4A illustrates an exemplary magnetic field energy harvester with planar inductor coil design connected with an integrated chip (IC) in a 3-pin package that may include the controller 220. This allows the inductor coil to be integrated on the same printed circuit board (PCB) as the IC. The inductor coil has a magnetic core axis perpendicular to the plane of the PCB. The output capacitor 290 is not shown here, but may be also mounted on the same PCB.

FIG. 4B illustrates an exemplary magnetic field energy harvester with inductor coil design connected with an integrated chip (IC) in a 3-pin package that may include the controller 220. This allows the inductor coil to be integrated on the same printed circuit board (PCB) as the IC. In this configuration, the inductor coil's magnetic core axis is on or parallel to the plane of the PCB. Here, there may be an additional magnetic field concentrator, built or mounted onto the PCB. The magnetic field concentrator may be of a ferrous magnetic material, shaped with cross-sectional areas at the two ends larger than the cross sectional area of the portion passing through the middle of the inductor coil. This magnetic field concentrator may collect magnetic fields at the two ends and concentrate the magnetic field passing through the middle of the inductor coil. The output capacitor 290 is not shown here, but may be also mounted on the same PCB.

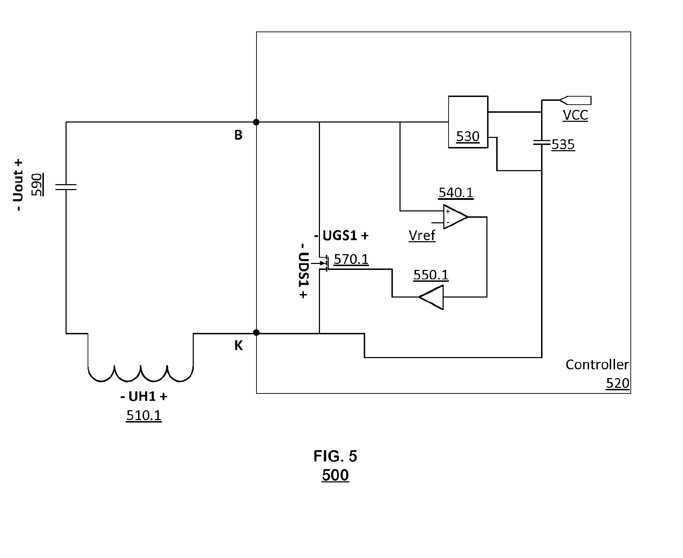

FIG. 5 illustrates an exemplary magnetic field energy harvester according to an embodiment of the present invention.

As illustrated in FIG. 5, a device 500 may include an inductor 510.1 and a controller 520. The inductor 510.1 may generate a voltage UH1. The controller 520 may monitor the voltage UH1 and may generate approximately constant DC output voltage (Uout on output capacitor 590) by switching on and off switch 570.1.

The controller 520 may a first node B connected a positive node of the capacitor 590 and connected to a charge pump 530 and a second node K connected to one end of inductor 510.1. The charge pump 530 is also connected to second node K and outputs a supply to a capacitor 532 to maintain a VCC power supply internal to the controller 520. In this fashion, the charge pump 530 may draw current from the inductor 510.1 to power the VCC node internal to the controller 520, with the VCC node powering components within the controller 520. The charge pump 530 may include a diode (not shown) to ensure the charge pump 530 is only powered during one of switching phases (similar to diode 230).

The node B may be connected to input of comparator 540.1, so that voltage of node B are compared to reference voltage Vref. Vref may be generated by a variety of means and circuits, preferably internal to the controller 520, for example by resistive and/or diode voltage dividers. Vref may also be set from external settings or voltage signals.

The output of the comparator 540.1 may be connected to input of buffer 550.1, which has output connected to the gates of switch 570.1. Buffer 550.1 may be optional, such that the output of the comparator 540.1 is connected to the gate of switch 570.1.

The switch 570.1 may have drain node connected to node K, and source node connected to node B. Switch 570.1 may have drain-source voltage UDS1 and gate-source voltage UGS1. The switch 570.1 may be metal-oxide-silicon-field-effect-transistor (MOSFET), or other types of transistor. Preferably, switch 570.1 may be n-type MOSFET's.

Furthermore, the device 500 may include an output capacitor 590 to smooth out and maintain an approximately constant DC output voltage (Uout) for output power supply, which may be used to power external electronic devices.

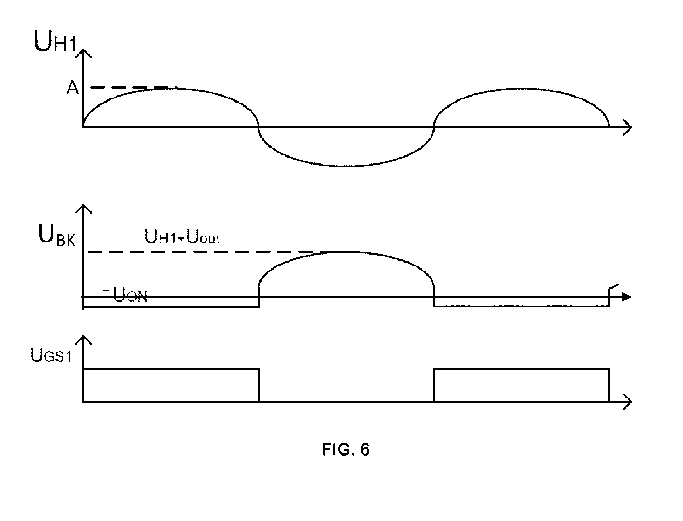

FIG. 6 illustrates a signal timing diagram for an exemplary magnetic field energy harvester 500 of FIG. 5 according to an embodiment of the present invention.

According to FIG. 6, the inductor 510.1 may generate an AC waveform, oscillating between positive and negative polarity with amplitude A. When voltage UH1 is positive, UH1 may be high enough to charge capacitor 590. This may cause voltage UBK (between node B and node K) to go negative. The internal power supply VCC of controller 520 remains powered by capacitor 535, and the comparator 540.1 may trip, causing switch 570.1 to turn on, connecting node K to node B. In this phase, (positive phase of voltage UH1), the inductor 510 charges the capacitor 590.

When voltage UH1 is negative, voltage UH1 and voltage UOUT are added to each other on voltage UBK, which does not charge the capacitor 590. In this phase, the comparator 540.1 may turn off the switch 570.1, to prevent the inductor 510.1 from discharging capacitor 590. In this phase, the voltage UBK, which is the sum of UH1 and Uout, is applied to charge pump 530, which turns on for generating internal VCC.

The charge pump 530 may be optional, if the inductor generates sufficiently high voltage and energy to directly charge the capacitor 535 and maintain its charge for all phases of switching.

This configuration allows a half-wave rectification.

The devices in the embodiment may be used for energy harvesting of magnetic field, which is generated around high current power lines. Potential-free line protection is needed for smart grid high current and high voltage application. The device combines high efficient voltage rectification by using properly control method and one advantageous circuitry arrangement.

Accordingly, the magnetic field energy harvesting device with a simple efficient controller may be implemented for field use.

Although the invention has been described above with reference to specific embodiments, the invention is not limited to the above embodiments and the specific configurations shown in the drawings. For example, some components shown may be combined with each other as one embodiment, or a component may be divided into several subcomponents, or any other known or available component may be added. Those skilled in the art will appreciate that the invention may be implemented in other ways without departing from the spirit and substantive features of the invention. The present embodiments are therefore to be considered in all respects as illustrative and not restrictive. The scope of the invention is indicated by the appended claims rather than by the foregoing description, and all changes that come within the meaning and range of equivalency of the claims are therefore intended to be embraced therein.

## Claims

1. A device, comprising:
an inductor (210) with two windings connected in series with each other at a tap; and
a controller (220),
wherein the windings are configured in winding directions and orientations, to generate two voltages relative to the tap of the inductor and out of phase with each other, and
wherein the controller (220) switches the two voltages in alternating fashion to charge an output capacitor (290) to generate an approximately constant DC output voltage.

2. The device of claim 1, wherein the two windings (210.1, 210.2) have the same winding direction relative to each other.

3. The device of claim 1 or 2, wherein the controller (290) comprises two diodes (220.1, 220.2) with anodes connected to two end nodes of the inductor and cathodes connected to each other and to a charge pump (230).

4. The device of claim 1 or 2, wherein the controller (290) comprises two diodes (220.1, 220.2) with anodes connected to two end nodes of the inductor and cathodes connected to each other and to an internal power supply node of the controller.

5. The device of claim 3 or 4, wherein the two diodes comprise Schottky diodes.

6. The device of claim 1, 2 or 3, wherein the controller comprises a charge pump (230) drawing current from the inductor to power an internal power supply of the controller.

7. The device of any preceding claim, wherein the controller (290) comprises two switches (270.1, 270.2) controlled by the controller to connect, in alternating fashion, two end nodes of the inductor to a ground node of the output capacitor.

8. The device of claim 7, wherein the two switches comprises field effect transistors.

9. The device of claim 7, wherein the two switches comprises MOSFET's.

10. The device of claim 7, 8 or 9, wherein the controller comprises two comparators controlling switching of the two switches based on voltages of the two end nodes of the inductor and two buffers connected between the two comparators and respective of the two switches.

11. A system, comprising:
an output capacitor;
a circuit board; and a device as claimed in any preceding claim.

12. A system, comprising:
an output capacitor;
a circuit board;
an inductor with two windings connected in series with each other at a tap; and
a controller,
wherein the windings are configured in winding directions and orientations, to generate two voltages relative to the tap of the inductor and out of phase with each other, and
wherein the controller switches the two voltages in alternating fashion to charge the output capacitor to generate an approximately constant DC output voltage.

13. A device, comprising:
an output capacitor;
an inductor connected in series with the output capacitor; and
a controller,
wherein the controller controls a switch to allow current flow from the inductor to charge the output capacitor when the inductor is in a first phase of an alternating magnetic field, and the controller charges an internal power supply of the controller when the inductor is in a second phase of the alternating magnetic field.
